# EUROPÄISCHE PATENTSCHRIFT

(11) **EP 2 106 766 B1**
(45) Veröffentlichungstag und Bekanntmachung des Hinweises auf die Patenterteilung: **05.07.2017**
(21) Anmeldenummer: 09156901.2
(22) Anmeldetag: 31.03.2009
(51) Int. Cl.: A61C 8/00

(54) **Aufbaupfosten für ein Dentalimplantat**
Abutment for dental implant
Pilier pour implant dentaire

(30) Priorität: 01.04.2008 DE 202008004463 U
(43) Veröffentlichungstag der Anmeldung: 07.10.2009
(73) Patentinhaber: Straumann Holding AG, 4002 Basel (CH)
(72) Erfinder: Egli, David, CH-4052 Basel (CH); Maspero, Fabrizio, CH-4052 Basel (CH)
(74) Vertreter: Modiano, Micaela Nadia

(56) Entgegenhaltungen:
- WO-A-03/037207
- DE-U1- 8 905 688

## Beschreibung

Die vorliegende Erfindung betrifft allgemein einen Aufbaupfosten für ein Dentalimplantat und insbesondere einen Aufbaupfosten für ein Dentalimplantat mit einem verbesserten apikalen Teil.

### Stand der Technik

Aus der WO 03/037207 A1 bzw. DE 89 05 688 U1 sind Aufbaupfosten gemäß Oberbegriff des Anspruchs 1 bekannt. Aus der EP 1 894 541 A1, die auf die gegenwärtige Schutzrechtinhaberin übertragen wurde, ist ein Aufbaupfosten für ein Dentalimplantat bekannt, der mit einem mit vier Nuten versehenen, apikalen Basisteil ausgestattet ist, die zur rotationsgesicherten Aufnahme des Aufbaupfostens mit dem Basisteil in ein Implantat ausgebildet sind.

Der aus der EP 1 894 541 A1 bekannte, mit vier Nuten versehe Aufbaupfosten ist ebenfalls in dem auf die gegenwärtige Schutzrechtinhaberin übertragene Gemeinschaftsgeschmacksmuster 000623749 gezeigt.

Bei der oben geschilderten, bekannten Ausbildung des apikalen Basisteils werden die vier Nuten in die im Wesentlichen zylindrische Mantelfläche des Basisteils zum Beispiel durch Fräsen eingearbeitet, so dass in Bezug zur Mantelfläche vertiefte Kanäle oder Nuten gebildet werden, die sich in Axialrichtung des Aufbaupfostens erstrecken.

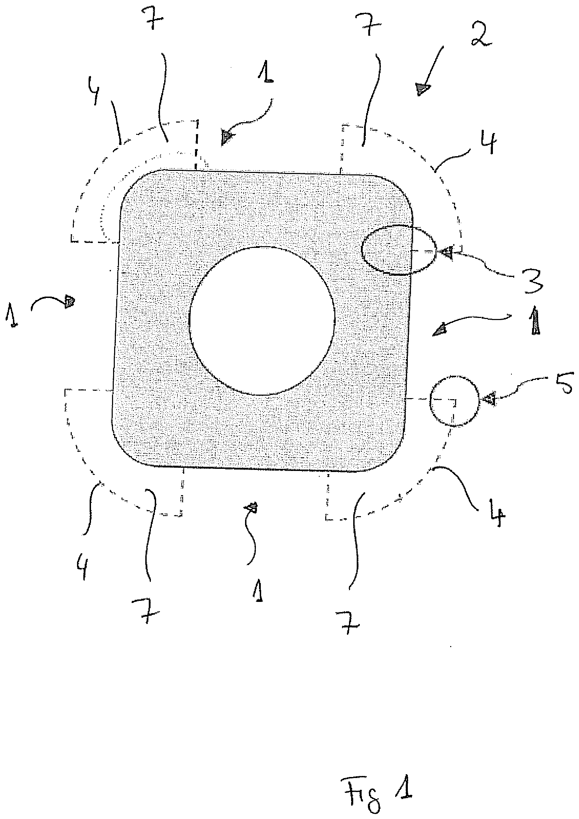

Eine schematische Ansicht der vertieften Kanäle oder Nuten wird in der Fig. 1 gezeigt, worin eine stark vereinfachte Darstellung des Basisteils von der apikalen Seite des Aufbaupfostens her gezeigt wird.

Die mit dem Bezugszeichen 1 bezeichneten Nuten mit den dazwischenliegenden Lappen 7 des Basisteils 2 stellen ein Problem bei der Herstellung des Aufbaupfosten dar, insbesondere angesichts der kleinen Abmessungen und der engen Toleranzen, die auf dem Gebiet der Dentalimplantate erforderlich sind. Das Problem der Herstellung tritt bei keramischen Aufbaupfosten wegen der Brüchigkeit des zu verarbeitenden Materials verstärkt auf

Unter weiterer Bezugnahme auf die Fig. 1 werden die bei der Herstellung des Aufbaupfostens auftretenden problematischen Stellen des apikalen Basisteils 1 in den jeweils eingekreisten Bereichen verdeutlicht.

Eine erste problematische Stelle, die in der Fig. 1 mit dem Bezugszeichen 3 bezeichnet ist, tritt an der mit Bezug auf die zylindrische Mantelfläche 4 des apikalen Basisteils 2 am tiefsten gelegenen Position der Nut 1 auf, die mit den gängigen maschinellen Verarbeitungsverfahren, wie z. B, Fräsen, schwer mit der für Dentalimplantate erforderlichen Präzision zu erzielen ist.

Eine zweite problematische Stelle, die in der Fig, 1 mit dem Bezugszeichen 5 bezeichnet ist, tritt an der mit Bezug auf die zylindrische Mantelfläche 4 des apikalen Basisteils 2 am höchsten gelegenen Position der Nut 1 auf, und ist insbesondere was die Brüchigkeit anbelangt empfindlich.

### Zusammenfassung der Erfindung

Daher ist es eine Aufgabe der vorliegenden Erfindung einen Aufbaupfosten für ein Dentalimplantat bereitzustellen, der die obigen Probleme vermeidet.

Im Rahmen dieser Aufgabe besteht eine besondere Aufgabe der vorliegenden Erfindung darin, einen Aufbaupfosten für ein Dentalimplantat zu realisieren, der problemlos aus verschiedenen Materialien wie z. B. Titan oder Keramik herstellbar ist.

Zusätzlich besteht eine besondere Aufgabe der vorliegenden Erfindung in der Bereitstellung eines Aufbaupfostens für ein Dentalimplantat, der eine ausreichende Rotationssicherung im zusammengebauten Zustand mit dem Implantat bietet und gleichzeitig das Einrühren des Aufbaupfosten in das Implantat in der gegebenen Winkelstellung ermöglicht.

Diese und weitere der nachfolgenden Beschreibung zu entnehmenden Aufgaben werden von einem Aufbaupfosten für ein Dentalimplantat gemäß dem anliegenden Anspruch 1 gelöst.

Weitere Merkmale und Vorteile der vorliegenden Erfindung sowie die Wirkungsweise der exemplarischen Ausführungsform der vorliegenden Erfindung werden unten mit Bezug auf die begleitenden Zeichnungen beschrieben. Die begleitenden Zeichnungen veranschaulichen die vorliegende Erfindung und dienen zusammen mit der Beschreibung weiterhin dazu, die Grundsätze der Erfindung zu erklären und es einem Fachmann auf dem betreffenden Gebiet zu ermöglichen, die Erfindung herzustellen und zu verwenden. Dabei zeigen:
Fig. 1 eine schematische Ansicht des Basisteils von der apikalen Seite des aus der EP 1 894 541 A1 bekannten Aufbaupfostens her;

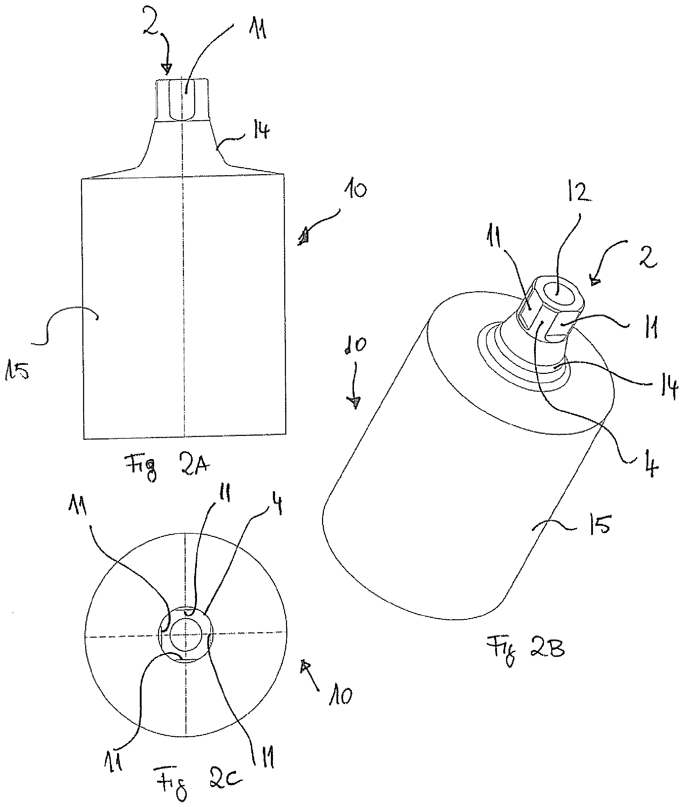

Figuren 2A, 2B und 2C eine erste Ausführungsform des erfindungsgemäßen Aufbaupfostens für ein Dentalimplantat, wobei die Fig. 2A eine Seitenansicht des Aufbaupfostens, die Fig. 2B eine perspektivische Ansicht des Aufbaupfostens und die Fig. 2C eine apikale Ansicht von unten des Aufbaupfostens zeigt; und

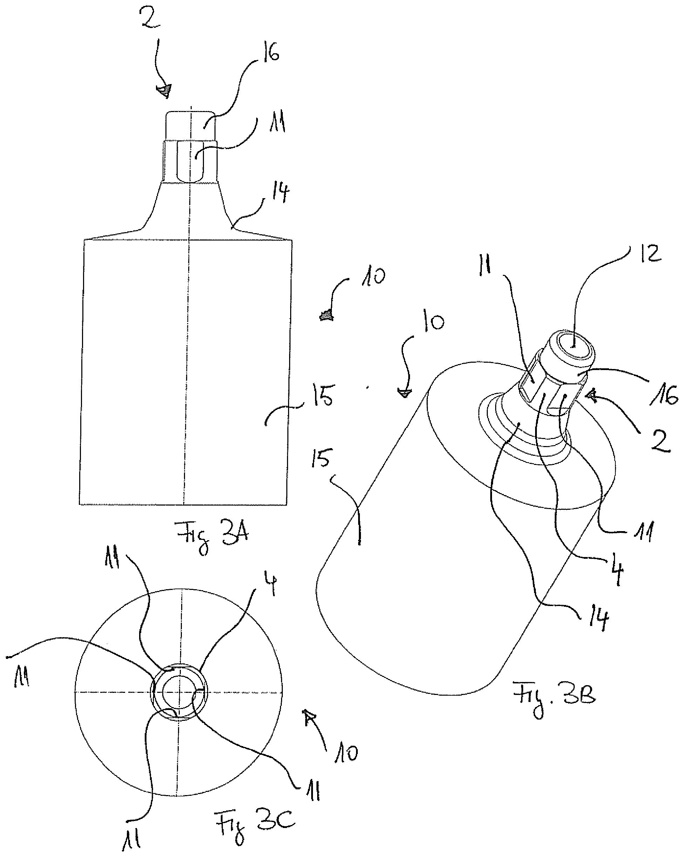

Figuren 3A, 3B und 3C eine zweite Ausführungsform des erfindungsgemäßen Aufbaupfostens für ein Dentalimplantat, wobei die Fig. 3A eine Seitenansicht des Aufbaupfostens, die Fig. 3B eine perspektivische Ansicht des Aufbaupfostens und die Fig. 3C eine apikale Ansicht von unten des Aufbaupfostens zeigt.

### Beschreibung der bevorzugten Ausführungsformen der Erfindung

Unter Bezugnahme auf die Figuren 2A bis 2C wird eine erste Ausführungsform des Aufbaupfostens für ein Dentalimplantat gemäß der vorliegenden Erfindung beschrieben.

Der mit dem Bezugszeichen 10 allgemein gekennzeichnete Aufbaupfosten (Abutment) verfügt über ein apikales Basisteil 2, das zur Aufnahme in ein Implantat (nicht gezeigt) ausgebildet ist. Darüber hinaus ist der Aufbaupfosten 10, wie im Fachgebiet wohl bekannt, mit einer durchgehenden Bohrung 12 ausgestattet, die zur Aufnahme einer (ebenfalls nicht gezeigten) Schraube zur Sicherung des Aufbaupfostens 10 an das Implantat ausgebildet ist. Vorzugsweise ist das apikale Basisteil 2 im Wesentlichen zylindrisch ausgebildet, wobei es jedoch denkbar ist, das Basistel 2 auch kegelstumpfförmig auszubilden.

Erfindungsgemäß, weist das apikale Basisteil 2 vier profilierte Abschnitte zur Rotationssicherung des Aufbaupfostens 10 im Implantat auf, die als planare Flächen 11 in der Mantelfläche 4 des Basisteils 2 ausgebildet sind.

Somit kann die Bildung von Nuten 1 mit den dazwischenliegenden Lappen 7 des Standes der Technik, wie in der Fig. 1 dargestellt, vermieden werden und die ebenen Flächen 11 können einfach und unproblematisch von der Mantelfläche 4 des apikalen Basisteils 2 abgetragen werden.

Jede ebene Fläche 11 eines profilierten Abschnitts liegt somit in der Ebene, die von den zwei Generatrixen des Basisteils 2 bestimmt wird, die diese ebene Fläche in axialer Richtung des Aufbaupfostens 10 begrenzen.

Vorzugsweise sind die ebenen Flächen 11, die an den gegenüberliegenden Seiten des apikalen Basisteils 2 liegen, paarweise gleich groß, wobei sich die Paare in Länge und/oder Breite unterschieden können. In einer weiteren Alternative ist es denkbar, alle ebenen Flächen gleich groß zu gestalten.

Obgleich die Anzahl der ebenen Flächen 11 variierbar ist, enthält vorzugsweise das apikale Basisteil 2 vier ebene Flächen, da sich diese Anzahl, was einerseits die Rotationssicherung anbelangt und andererseits die Verarbeitbarkeit, als guter Kompromiss erwiesen hat. Insbesondere bietet die bevorzugte Variante des Aufbaupfostens mit vier ebenen Flächen 11 eine erhöhte Rotationssicherung und erfordert weniger Präzision in der Parallelität der sich gegenüberliegenden ebenen Flächen 11.

An das Basisteil 2 des Aufbaupfostens 10 schließt ein rotationssymmetrisches Übergangsteil 14 an, das vorzugsweise als Kegelstumpf ausgebildet ist.

Das Übergangsteil 14 geht in einen okklusalen Abschnitt 15 über, aus dem in bekannter Weise der Aufbaupfosten geformt werden kann.

Unter Bezugnahme auf die Figuren 3A bis 3C wird eine zweite Ausführungsform des Aufbaupfostens für ein Dentalimplantat gemäß der vorliegenden Erfindung beschrieben. In dieser zweiten Ausführungsform werden gleiche Bezugszeichen wie in den Figuren der ersten Ausführungsform zur Kennzeichnung gleicher Teile verwendet.

Abweichend von der ersten Ausführungsform wird in der zweiten apikal zum Basisteil 2 ein im Wesentlichen zylindrischer Körper 16 bereitgestellt, um das Einrühren und Führen des Aufbaupfostens 10 in das (nicht gezeigte) Implantat zu erleichtern.

Die vorstehend erläuterten Ausführungsformen des Aufbaupfostens können aus Titan oder Keramik oder dergleichen hergestellt werden, wobei sie sich in der Praxis für besonders vorteilhaft in Verbindung mit aus Keramik hergestellte Aufbaupfosten erwiesen haben.

Wenn in irgendeinem der Ansprüche erwähnte technische Merkmale mit einem Bezugszeichen versehen sind, wurden diese Bezugszeichen lediglich eingeschlossen, um die Verständlichkeit der Ansprüche zu erhöhen. Entsprechend haben diese Bezugszeichen keine einschränkende Auswirkung auf den Schutzumfang eines jeden Elements, das exemplarisch durch solche Bezugszeichen bezeichnet wird.

## Patentansprüche

1. Kombination aus einen Aufbaupfosten (10) und einem Dentalimplantat, wobei der Aufbaupfosten (10) folgendes umfasst:
ein mit profilierten Abschnitten versehenes apikales Basisteil (2) mit einer durchgehenden Bohrung (12),
ein an das apikale Basisteil (2) koronal anschliessendes rotationssymmetrisches Übergangsteil (14), und
einen an das Übergangsteil (14) koronal anschliessenden okklusalen Abschnitt (15), in den das Übergangsteil (14) übergeht,
**dadurch gekennzeichnet, dass** das apikale Basisteil (2) im Wesentlichen zylindrisch oder kegelstumpfförmig ausgebildet ist, und dass die profilierten Abschnitte als planare Flächen (11) in der Mantelfläche (4) des apikalen Basisteils (2) ausgebildet sind, wobei jede ebene Fläche (11) des profilierten Abschnitts in einer Ebene liegt, die von den zwei Generatrixen des apikalen Basisteils (2) bestimmt wird, die die ebene Fläche (11) in axialer Richtung des Aufbaupfostens (10) begrenzen, und dass
das apikale Basisteil (2) des Aufbaupfostens (10) zur Aufnahme in das Dentalimplantat ausgebildet ist.

2. Kombination nach Anspruch 1, wobei das apikale Basisteil (2) vier ebene Flächen (11) hat.

3. Kombination nach Anspruch 1 oder 2, wobei die ebenen Flächen (11), die an den gegenüberliegenden Seiten des apikalen Basisteils (2) liegen, paarweise gleich groß sind, wobei sich die Paare in Länge und/oder Breite unterschieden.

4. Kombination nach Anspruch 1 oder 2, wobei die ebenen Flächen (11) gleich groß sind.

5. Kombination nach einem oder mehreren der Ansprüche 1-4, wobei der Aufbaupfosten aus Keramik hergestellt ist.

6. Kombination nach einem oder mehreren der Ansprüche 1-4, wobei der Aufbaupfosten aus Titan hergestellt ist.

## Claims

1. Combination of an abutment (10) and a dental implant, the abutment (10) comprising:
an apical base part (2), provided with profiled sections and with a through bore (12),
a rotationally symmetrical transition portion (14) which coronally borders on the apical base part (2) and
an occlusal portion (15) coronally bordering on the transition portion (14), with which the transition portion (14) blends,
**characterized in that** the apical base part (2) substantially has the form of a cylinder or a truncated cone, and **in that** the profiled sections are formed as planar surfaces (11) in the surface area (4) of the apical base part (2), where each planar surface (11) of the profiled section is located on a plane defined by the two generatrices of the apical base part (2) which limit the planar surface (11) in the axial direction of the abutment (10), and **in that**
the apical base part (2) of the abutment (10) is adapted for accommodation in the dental implant.

2. Combination according to Claim 1, the apical base part (2) having four planar surfaces (11).

3. Combination according to Claim 1 or 2, the planar surfaces (11) located on the opposite sides of the apical base part (2) having the same size in pairs, with the pairs differing in length and/or width.

4. Combination according to Claim 1 or 2, where the planar surfaces (11) have the same size.

5. Combination according to one or more of Claims 1-4, the abutment being made of ceramics.

6. Combination according to one or more of Claims 1-4, the abutment being made of titanium.

## Revendications

1. Combinaison d'un pilier (10) et d'un implant dentaire, dans laquelle le pilier (10) comporte les éléments suivants :
une partie de base apicale (2) pourvue de portions profilées ayant un alésage traversant (12),
une partie de transition symétrique en rotation (14) bordant la partie de base apicale (2) de manière coronaire, et
une portion occlusale (15) bordant la partie de transition (14) de manière coronaire, portion occlusale dans laquelle la partie de transition (14) se prolonge,
**caractérisée en ce que** la partie de base apicale (2) est configurée de manière sensiblement cylindrique ou en forme de cône tronqué, et **en ce que** les portions profilées sont configurées sous forme de surfaces planes (11) dans la surface extérieure (4) de la partie de base apicale (2), dans laquelle chaque surface plane (11) de la portion profilée se situe dans un plan qui est déterminé par les deux génératrices de la partie de base apicale (2) qui délimitent la surface plane (11) dans une direction axiale du pilier (10), et
**en ce que** la partie de base apicale (2) du pilier (10) est configurée de manière à être reçue dans l'implant dentaire.

2. Combinaison selon la revendication 1, dans laquelle la partie de base apicale (2) a quatre surfaces planes (11).

3. Combinaison selon la revendication 1 ou 2, dans laquelle les surfaces planes (11) qui se situent sur les côtés opposés de la partie de base apicale (2), sont par paire de taille identique, dans laquelle les paires diffèrent en longueur et/ou en largeur.

4. Combinaison selon la revendication 1 ou 2, dans laquelle les surfaces planes (11) ont une taille identique.

5. Combinaison selon une ou plusieurs des revendications 1 à 4, dans laquelle le pilier est fabriqué en céramique.

6. Combinaison selon une ou plusieurs des revendications 1 à 4, dans laquelle le pilier est fabriqué en titane.
